# EUROPÄISCHE PATENTSCHRIFT

(11) **EP 3 138 811 B1**
(45) Veröffentlichungstag und Bekanntmachung des Hinweises auf die Patenterteilung: **04.04.2018**
(21) Anmeldenummer: 15183513.9
(22) Anmeldetag: 02.09.2015
(51) Int. Cl.: C01B 13/11, D04B 1/14

(54) **OZONERZEUGUNG MIT DIREKT GEKÜHLTEM PLASMA**
OZONE GENERATION WITH DIRECTLY COOLED PLASMA
PRODUCTION D'OZONE A L'AIDE DE PLASMA REFROIDI DIRECTEMENT

(43) Veröffentlichungstag der Anmeldung: 08.03.2017
(73) Patentinhaber: Xylem IP Management S.à.r.l., 1259 Senningerberg (LU)
(72) Erfinder: FIEKENS, Ralf, 33758 Schlossholte-Stukenbrock (DE); FIETZEK, Reiner, 32049 Herford (DE); SALVERMOSER, Dr. Manfred, 32049 Herford (DE); BRÜGGEMANN, Nicole, 32130 Enger (DE)
(74) Vertreter: Lenzing Gerber Stute

(56) Entgegenhaltungen:
- WO-A1-2012/097970
- CN-Y- 201 268 807
- US-A- 2 372 673
- US-A- 6 106 788
- US-A1- 2013 008 209
- US-B1- 6 289 702

## Beschreibung

Die vorliegende Erfindung betrifft einen Ozongenerator mit den Merkmalen des Oberbegriffs des Anspruchs 1 und die Verwendung eines Flächengebildes in einem Gasstrom eines Ozongenerators mit den Merkmalen des Oberbegriffs des Anspruchs 9.

Der Wirkungsgrad von Ozonerzeugern ist stark abhängig von der Temperatur im Entladungsraum. Zum einen liegt das daran, dass die Ozonbildungsreaktion bei niedrigen Temperaturen besser abläuft und zum anderen daran, dass die Kinetik des Ozonzerstörungsmechanismus exponentiell mit der Temperatur zunimmt. Eine effektive Kühlung des Gasraumes ist somit zwingend notwendig für eine effiziente Ozongenerierung. Aus dem Stand der Technik sind ein- oder zweiseitig mit Wasser gekühlte Ozongeneratoren bekannt. Deren limitierender Faktor beim Wärmetransport ist die Wärmeleitfähigkeit im Entladungsspalt. Im Vergleich zu dem Gas, das den Entladungsspalt durchströmt, leitet das Elektrodenmaterial, beispielsweise Edelstahl, die Wärme um zwei bis drei Größenordnungen besser.

Aus der Offenlegungsschrift US 4,232,229 ist ein Ozongenerator bekannt, der in einem Entladungsspalt zwischen einer Hochspannungselektrode und einer Gegenelektrode ein perforiertes Metallgebilde aufweist, das beispielsweise ein Drahtnetz oder ein gelochtes Metallblech sein kann. Das Metall weist eine gute Wärmeleitfähigkeit auf, wodurch der Wärmetransport im Entladungsspalt vom Gas zu der gekühlten Grenzfläche und somit auch der Wirkungsgrad des Ozongenerators verbessert werden kann. Zwischen dem Metallgebilde und einer Hochspannungselektrode bilden sich stille Entladungen aus. Die Struktur des zur Wärmeableitung eingesetzten Metalls gibt dabei eine effektive Spaltbreite vor.

Aus der WO 8911908 A1 ist ein Ozongenerator bekannt, der eine Elektrode aufweist, die aus gewebten Edelstahldrähten gebildet ist und die in Anlage mit einem Dielektrikum steht. Je feiner das Gewebe ist, desto mehr Entladungspunkte stehen der stillen Entladung zur Verfügung, wodurch die Effektivität steigt. Das Gewebe darf allerdings nicht zu fein sein, da dies in einer großen Entladungsfläche resultiert, die entsprechend viel Wärme generiert, was wiederum für die Ozonherstellung von Nachteil ist.

WO 2012/097970 offenbart einen Ozongenerator, der zwei Elektroden aufweist. Ein Flächengebilde, welches einen Edelstahldraht aufweist, ist in dem Gastrom angeordnet.

Ein Flächengebilde, das eine Materialkombination aus wenigstens einem Draht und wenigstens einer elektrisch nichtleitenden Faser bzw. Glas aufweist ist in CN 201 268 807, US2012/008209 offenbart. Es ist Aufgabe der vorliegenden Erfindung, einen Ozongenerator anzugeben, der einen guten Wärmetransport im Entladungsspalt aufweist. Weiterhin ist es Aufgabe der Erfindung ein Flächengebilde zum Einsatz in einem von Gas durchströmten Raum eines Ozongenerators anzugeben, das die Wärme gut transportiert.

Der Begriff Flächengebilde" ist aus der Textiltechnik bekannt (Englisch: woven or non-woven fabric). Als textiles Flächengebilde ist jedes flächige Gebilde zu bezeichnen, das aus textilen Rohstoffen nach einer Textiltechnologie hergestellt wird. Im Zusammenhang der vorliegenden Patentanmeldung wird dementsprechend unter einem Flächengebilde jedes plane, gekrümmte oder gewölbte flächige Gebilde verstanden, das nach einer Textiltechnologie hergestellt wird. Darunter fallen unter anderem Fadenverbundstoffe, wie Gewebe, Maschenstoffe, Geflechte und Netze, und Faserverbundstoffe, wie Vliesstoffe und Watten.

Die zuvor genannte Aufgabe wird von einem Ozongenerator mit den Merkmalen des Anspruchs 1 und durch die Verwendung eines Flächengebildes in einem Gasstrom eines Ozongenerators mit den Merkmalen des Anspruchs 9 gelöst.

Danach ist ein Ozongenerator mit einer Hochspannungselektrode und wenigstens einer Gegenelektrode, die einen Zwischenraum begrenzen, in dem wenigstens ein Dielektrikum angeordnet ist und der von einem Gasstrom in Strömungsrichtung durchströmt wird, vorgesehen, wobei die Hochspannungselektrode und die wenigstens eine Gegenelektrode mit einem Anschluss für eine elektrische Spannungsversorgung zur Erzeugung von stillen Entladungen versehen sind, und ein Flächengebilde in dem Gasstrom angeordnet ist, wobei das Flächengebilde eine Materialkombination aus wenigstens einem Draht und wenigstens einer elektrisch nichtleitenden Faser aufweist.

Durch die Materialkombination aus Draht und elektrisch nichtleitender Faser kann trotz einer Vielzahl von Entladungspunkten, die Wärme aus dem Entladungsspalt effektiv abtransportiert werden.

Vorzugsweise bildet die wenigstens eine elektrisch nichtleitende Faser ein Band, das eine Breite aufweist, die wenigstens 5 mal so breit ist wie der wenigstens eine Draht. Die elektrisch nichtleitenden Fasern können auch in Form von Garnen zu dem Band verarbeitet werden.

In einer bevorzugten Ausführungsform ist das Flächengebilde ein Gewebe oder Geflecht. Wobei das Geflecht bei Rohrozongeneratoren bevorzugt wird, da mittels Flechten besonders einfach hohle Rundschnüre hergestellt werden können.

Bevorzugt steht die wenigstens eine nichtleitende Faser in flächiger Anlage mit dem wenigstens einen Dielektrikum. Durch den Kontakt mit dem Dielektrikum kann die Wärme aus dem Entladungsspalt über die nichtleitende Faser abtransportiert werden.

Es ist vorteilhaft, wenn das Verhältnis von Drahtmasse pro Flächeneinheit und Fasermasse pro Flächeneinheit in Strömungsrichtung abnimmt. Dadurch nimmt die in den Entladungsspalt eingetragene Wärme in Strömungsrichtung ab und der Wärmetransport nimmt in Strömungsrichtung zu, so dass der in Strömungsrichtung ansteigenden Temperatur entgegen gewirkt werden kann.

Vorzugsweise ist das Flächengebilde einstückig ausgebildet, wodurch es besonders einfach in den Zwischenraum einzubringen ist.

Die wenigstens eine elektrisch nichtleitende Faser ist vorzugsweise aus Keramik und/oder Glas hergestellt.

Eine bevorzugte Ausführungsform sieht vor, dass die Hochspannungselektrode wenigstens teilweise aus dem Flächengebilde gebildet ist. Das schließt mit ein, dass die Hochspannungselektrode komplett aus dem Flächengebilde gebildet sein kann.

Weiterhin ist ein Flächengebilde zur Verwendung in einem Gasstrom eines Ozongenerators vorgesehen, das eine Materialkombination aus wenigstens einem Draht und wenigstens einer elektrisch nichtleitenden Faser aufweist.

Die Faser bildet dabei vorteilhafterweise ein Band, dass wenigstens 5 mal, vorzugsweise wenigstens 10 mal, so breit ist wie der wenigstens eine Draht.

Dabei nimmt, wie zuvor bereits beschrieben, das Verhältnis von Drahtmasse pro Flächeneinheit und Fasermasse pro Flächeneinheit in Strömungsrichtung in einer vorteilhaften Ausführungsform ab.

Dabei ist es vorteilhaft, wenn das Flächengebilde ein Gewebe oder ein Geflecht ist.

In einer Ausgestaltung weist das Flächengebilde wenigstens einen diskreten Bereich, in dem die wenigstens eine elektrisch nichtleitende Faser angeordnet ist und wenigstens einen weiteren diskreten Bereich auf, in dem das Flächengebilde nur Draht und keine elektrisch nichtleitende Faser enthält. Es können somit Bereiche vorhanden sein, die keine elektrisch nichtleitende Faser enthalten.

Vorzugsweise ist das Flächengebilde einstückig ausgestaltet. Wodurch es einfach in den Zwischenraum zu bringen ist und kostengünstig herzustellen ist.

Der Stand der Technik und eine bevorzugte Ausführungsform der Erfindung werden nachfolgend anhand der Zeichnungen näher erläutert. Es zeigen:
- Fig. 1:: eine schematische Darstellung eines Ozongenerators mit einseitiger bzw. zweiseitiger Wasserkühlung aus dem Stand der Technik, sowie
- Fig. 2:: eine räumliche Ansicht eines Flächengebildes gebildet aus Draht und einer elektrisch nichtleitenden Faser.

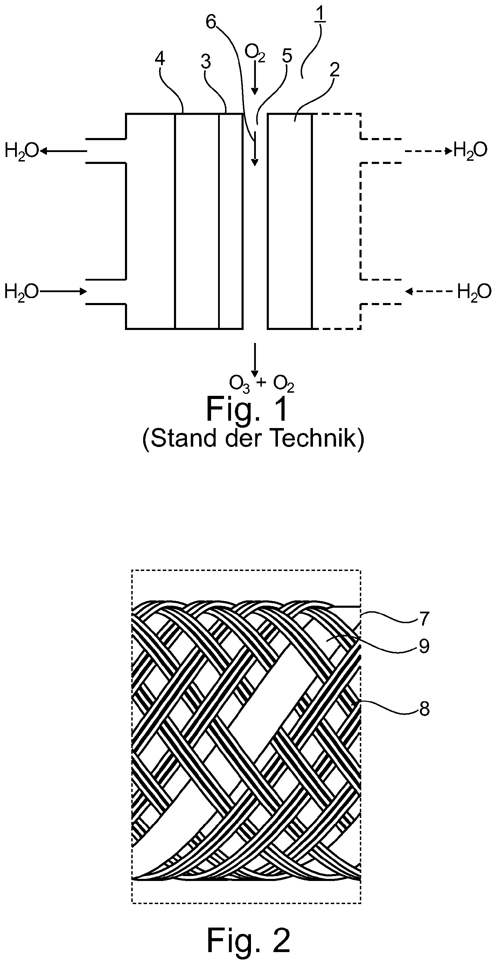

Figur 1 zeigt eine Elektrodenanordnung eines Ozongenerators 1. Solche Ozongeneratoren 1 können je nach Anwendungsgebiet als Plattenozongenerator oder Rohrozongenerator ausgestaltet sein.

Rohrozongeneratoren werden herkömmlicherweise gruppiert in einem Ozonerzeuger eingesetzt. Die Ozongeneratoren sind dabei nach Art eines Rohrbündelwärmetauschers parallel zueinander zwischen zwei Rohrböden angeordnet. Rohrozongeneratoren weisen eine rohrförmige Hochspannungselektrode 2, ein rohrförmiges Dielektrikum 3 und eine rohrförmige Gegenelektrode 4 auf. Die Anordnung ist rotationssymmetrisch. Die Hochspannungselektrode 2 und die Gegenelektrode 4 sind konzentrisch zueinander ausgerichtet. Sie begrenzen einen Zwischenraum 5, der von einem sauerstoffhaltigen Gas durchströmt wird und in dem das Dielektrikum 3 angeordnet ist. Die außenliegende Gegenelektrode 4 ist als Edelstahlrohr ausgebildet. Die bei der Ozonproduktion entstehende Abwärme wird durch Kühlwasser, welches an der Außenseite der Gegenelektrode 4 entlang geführt gekühlt. Dabei kann auch vorgesehen sein, den Generator 1 zweiseitig zu kühlen, in dem Kühlwasser die Hochspannungselektrode 2 auf der Innenseite durchströmt.

Plattenozonerzeuger weisen eine Hochspannungselektrode 2' und wenigstens eine Gegenelektrode 4' auf, die plattenförmig ausgestaltet sind. Die Elektroden 2', 4' begrenzen einen Zwischenraum 5', der von einem sauerstoffhaltigen Gas 6' durchströmt wird und in dem ein Dielektrikum 3' angeordnet ist. Herkömmlicherweise sind Plattenozonerzeuger ein- oder zweiseitig durch an den Außenseiten der Elektroden 2', 4' entlanggeführte Luft gekühlt.

Erfindungsgemäß wird in den Gasstrom 6 eines Ozongenerators 1 (Platten- oder Rohrerzeuger) ein Flächengebilde 7 eingebracht, das sowohl aus Draht 8 als auch aus einem elektrisch nichtleitenden Material 9 besteht. Der Draht 8 definiert die Entladungspunkte der stillen Entladung und das elektrisch nichtleitende Material 9 stellt eine direkte Wärmeankopplung an die Entladung und die angrenzenden Oberflächen her. Dazu stehen der Draht 8 und das nichtleitende Material 9 in einer Vielzahl von Punkten in Anlage. Im Gegensatz zum Draht 8 ist das nichtleitende Material 9 flächig ausgestaltet, so dass eine flächige Anlage des nichtleitenden Materials 9 mit der Elektrode 2, 2' bzw. des Dielektrikums 3,3' entsteht. Die Kontaktfläche sollte dabei möglichst großflächig sein. Im Bereich des elektrisch nichtleitenden Materials 9 finden keine Entladungen statt. Durch die Ankopplung des nichtleitenden Materials 9 mit dem Draht 8 kann die bei den Entladungen entstehende Wärme gut abtransportiert werden. Das elektrisch nichtleitende Material 9 ist ozon- und korrosionsbeständig. Vorzugsweise ist das elektrisch nichtleitende Material 9 eine keramische Faser oder eine Glasfaser.

In einer Ausführungsform ist vorgesehen, dass das Flächengebilde 7 eine der Elektroden 2, 2', 4, 4' bildet, bevorzugt die Hochspannungselektrode 2, 2'. Dabei ist es vorteilhaft, wenn das elektrisch nichtleitende Material 9 so in dem Flächengebilde 7 platziert ist, dass das Material 9 zumindest teilweise flächig in Anlage mit einem angrenzenden Dielektrikum 3, 3' steht.

Die Figur 2 zeigt eine rohrförmige Elektrode aus einem Flächengebilde 6. Der Draht 8 und das elektrisch nichtleitende Material 9 sind zu der rohrförmigen Elektrode zusammengeflochten. Ein aus dem elektrisch nichtleitenden Material 9 gebildetes Band ist in etwa sieben mal so breit wie der Draht 8. Die Drahtbreite ist dabei definiert als der Durchmesser des Drahtes 8 und die Bandbreite des aus Fasern bestehenden elektrisch nichtleitenden Materials 9 ist definiert als die Ausdehnung des Bandes senkrecht zur Faserlänge. Die Breite des Bandes ist somit deutlich größer als die Drahtbreite. Das Band liegt im Gegensatz zur punktförmigen Auflage des Drahtes 8 flächig auf. Die Bandbreite ist so gewählt, dass eine möglichst große Kontaktfläche der Fasern 9 mit zum Beispiel einem anliegenden Dielektrikum 3, 3' gegeben ist, was zu einem effektiven Abtransport der Wärme aus dem Entladungsraum 5, 5' hinaus führt. In einer vorteilhaften Ausführungsform ist vorgesehen, dass die Masse des elektrisch nichtleitenden Materials 9 pro Flächeneinheit in Strömungsrichtung zunimmt. Mit Zunahme der Masse des elektrisch nichtleitenden Materials 9 nehmen die Entladungspunkte pro Flächeneinheit ab, wodurch weniger Entladungen pro Fläche stattfinden und somit weniger Energie in Form von Wärme in den Entladungsspalt 5, 5' eingebracht wird. Dem in einem Ozongenerator 1 entlang der Strömungsrichtung entstehenden Temperaturgradienten kann somit entgegengewirkt werden, so dass auch in Strömungsrichtung am Ende des Ozongenerators 1, die Temperatur möglichst gering ist. Die Masse des elektrisch nichtleitenden Materials 9 pro Fläche kann variiert werden, zum Beispiel in dem die Bandbreite, die Anzahl der Bänder 9 oder der Abstand der Bändern bzw. Fasern 9 zueinander zu- oder abnimmt.

Es kann auch vorgesehen sein, abschnittsweise Flächengebilde 7 in den Entladungsspalt 5, 5' einzubringen, die nur aus einem Material, zum Beispiel Draht 8 oder elektrisch nichtleitendes Material 9, gebildet sind. So kann beispielsweise durch das abschnittsweise Einbringen von elektrisch nichtleitendem Material 9 eine Art Zwischenkühlung vorgenommen werden. Weiterhin kann vorgesehen sein, das elektrisch nichtleitende Material 9 nur in einem Endbereich des Ozongenerators einzusetzen, weil die Temperatur im Entladungsspalt 5, 5' dort besonders hoch ist und eine effektive Kühlung wünschenswert ist.

Vorzugsweise sind die Drähte aus Edelstahl hergestellt.

Alle beschriebenen Ausführungsformen finden sowohl bei Röhrenozongeneratoren, wie in Figur 2 gezeigt, als auch bei Plattenozongeneratoren Anwendung. Dabei ist die Anwendung bei Einspalt- als auch Mehrspaltsystemen vorgesehen.

Das Flächengebilde kann eine der Elektroden bilden, Teil einer Elektrode sein, zum Beispiel in dem das Flächengebilde auf die Elektrode gelegt wird und beide gemeinsam an eine Spannungsversorgung angeschlossen werden oder aber auch zwischen den Elektroden angeordnet sein.

Der erfindungsgemäße Ozongenerator und mit ihm das Flächengebilde verbessern den Wirkungsgrad von Ozongeneratoren, indem der Wärmetransport im Entladungsspalt erhöht wird. Durch den Einsatz von elektrisch nichtleitendem Material kann die Verteilung von Entladungen gezielt beeinflusst werden. Zudem kann das elektrisch nichtleitende Material eine möglichst große Kontaktfläche zu den angrenzenden Elektroden-und/oder Dielektrikumsoberflächen aufweisen, wodurch der Wärmetransport effektiver wird.

## Patentansprüche

1. Ozongenerator (1) mit einer Hochspannungselektrode (2, 2') und wenigstens einer Gegenelektrode (4, 4'), die einen Zwischenraum (5, 5') begrenzen, in dem wenigstens ein Dielektrikum (3, 3') angeordnet ist und der von einem Gasstrom (6, 6') in Strömungsrichtung durchströmt wird, wobei die Hochspannungselektrode (2, 2') und die wenigstens eine Gegenelektrode (4, 4') mit einem Anschluss für eine elektrische Spannungsversorgung zur Erzeugung von stillen Entladungen versehen sind, **dadurch gekennzeichnet, dass** ein Flächengebilde (7) in dem Gasstrom (6, 6') angeordnet ist, wobei das Flächengebilde (7) eine Materialkombination aus wenigstens einem Draht (8) und wenigstens einer elektrisch nichtleitenden Faser (9) aufweist.

2. Ozongenerator (1) nach Anspruch 1, **dadurch gekennzeichnet, dass** die wenigstens eine elektrisch nichtleitende Faser (9) ein Band bildet, das eine Breite aufweist, die wenigstens 5 mal so breit ist wie der wenigstens eine Draht (8).

3. Ozongenerator (1) nach Anspruch 1 oder 2, **dadurch gekennzeichnet, dass** das Flächengebilde (9) ein Gewebe oder Geflecht ist.

4. Ozongenerator (1) nach einem der vorhergehenden Ansprüche, **dadurch gekennzeichnet, dass** die wenigstens eine nichtleitende Faser (9) in flächiger Anlage mit dem wenigstens einen Dielektrikum (3, 3') steht.

5. Ozongenerator (1) nach einem der vorhergehenden Ansprüche, **dadurch gekennzeichnet, dass** das Verhältnis von Drahtmasse pro Flächeneinheit und Fasermasse pro Flächeneinheit in Strömungsrichtung abnimmt.

6. Ozongenerator (1) nach einem der vorhergehenden Ansprüche, **dadurch gekennzeichnet, dass** das Flächengebilde (7) einstückig ist.

7. Ozongenerator (1) nach einem der vorhergehenden Ansprüche, **dadurch gekennzeichnet, dass** die wenigstens eine elektrisch nichtleitende Faser (9) aus Keramik und/oder Glas hergestellt ist.

8. Ozongenerator (1) nach einem der vorhergehenden Ansprüche, **dadurch gekennzeichnet, dass** die Hochspannungselektrode (2, 2') wenigstens teilweise aus dem Flächengebilde (7) gebildet ist.

9. Verwendung eines Flächengebildes (7) in einem Gasstrom eines Ozongenerators (1), wobei der Gasstrom eine Strömungsrichtung aufweist, **dadurch gekennzeichnet, dass** das Flächengebilde (7) eine Materialkombination aus wenigstens einem Draht (8) und wenigstens einer elektrisch nichtleitenden Faser (9) aufweist.

10. Verwendung nach Anspruch 9, **dadurch gekennzeichnet, dass** die wenigstens eine elektrisch nichtleitende Faser (9) ein Band bildet, dass wenigstens 5 mal so breit ist wie der wenigstens eine Draht (8).

11. Verwendung nach Anspruch 10, **dadurch gekennzeichnet, dass** das Band (9) wenigstens 10 mal so breit ist wie der wenigstens eine Draht (8).

12. Verwendung nach einem der vorhergehenden Ansprüche 9 bis 11, **dadurch gekennzeichnet, dass** das Verhältnis von Drahtmasse pro Flächeneinheit und Fasermasse pro Flächeneinheit in Strömungsrichtung abnimmt.

13. Verwendung nach einem der vorhergehenden Ansprüche 9 bis 12, **dadurch gekennzeichnet, dass** das Flächengebilde (7) ein Gewebe oder ein Geflecht ist.

14. Verwendung nach einem der vorhergehenden Ansprüche 9 bis 13, **dadurch gekennzeichnet, dass** das Flächengebilde (7) wenigstens einen diskreten Bereich aufweist, in dem die wenigstens eine elektrisch nichtleitende Faser (9) angeordnet ist und dass wenigstens ein weiterer diskreter Bereich vorgesehen ist in dem das Flächengebilde (7) keine elektrisch nichtleitende Faser enthält.

15. Verwendung nach einem der vorhergehenden Ansprüche 9 bis 14, **dadurch gekennzeichnet, dass** das Flächengebilde (7) einstückig ausgebildet ist.

## Claims

1. Ozone generator (1) having one high-voltage electrode (2, 2') and at least one counter electrode (4, 4') bounding either side of a space (5, 5'), in which at least one dielectric (3, 3') is arranged, and which is perfused in the direction of flow by a gas flow (6, 6'), wherein the high-voltage electrode (2, 2') and the at least one counter electrode (4, 4') are provided with a connection for an electric power supply for generation by silent discharge, **characterised in that** a fabric (7) is arranged in the gas flow (6, 6'), wherein the fabric (7) has a combination of materials with at least one wire (8) and at least one electrically non-conductive fibre (9).

2. Ozone generator (1) according to claim 1, **characterised in that** the at least one electrically non-conductive fibre (9) forms a strip that has a width at least 5 times that of the width of the at least one wire (8).

3. Ozone generator (1) according to claim 1 or 2, **characterised in that** the fabric (9) is a weave or mesh.

4. Ozone generator (1) according to any of the preceding claims, **characterised in that** the at least one non-conductive fibre (9) is in two-dimensional contact with the at least one dielectric (3, 3').

5. Ozone generator (1) according to any of the preceding claims, **characterised in that** the ratio of the wire size per unit of surface area and the fibre size per unit of surface area decreases in the direction of flow.

6. Ozone generator (1) according to any of the preceding claims, **characterised in that** the fabric (7) is a single piece.

7. Ozone generator (1) according to any of the preceding claims, **characterised in that** the at least one electrically non-conductive fibre (9) is made from ceramic and/or glass.

8. Ozone generator (1) according to any of the preceding claims, **characterised in that** the high-voltage electrode (2, 2') is at least partly formed from the fabric (7).

9. Usage of a fabric (7) in a gas flow of an ozone generator (1), wherein the gas flow has a direction of flow, **characterised in that** the fabric (7) has a combination of materials with at least one wire (8) and at least one electrically non-conductive fibre (9).

10. Usage according to claim 9, **characterised in that** the at least one electrically non-conductive fibre (9) forms a strip, which is at least 5 times as wide as the at least one wire (8).

11. Usage according to claim 10, **characterised in that** the strip (9) is at least 10 times as wide as the at least one wire (8).

12. Usage according to any of the preceding claims 9 to 11, **characterised in that** the ratio of the wire size per unit of surface area and the fibre size per unit of surface area decreases in the direction of flow.

13. Usage according to any of the preceding claims 9 to 12, **characterised in that** the fabric (7) is a weave or mesh.

14. Usage according to any of the preceding claims 9 to 13, **characterised in that** the fabric (7) has at least one discrete section containing the at least one electrically non-conductive fibre (9) and that at least one other discrete section is provided in which the fabric (7) contains no electrically non-conductive fibres.

15. Usage according to any of the preceding claims 9 to 14, **characterised in that** the fabric (7) is formed of a single piece.

## Revendications

1. Ozoniseur (1) comportant une électrode haute tension (2, 2') et au moins une contre-électrode (4, 4') qui délimitent un espace intermédiaire (5, 5') dans lequel est disposé au moins un diélectrique (3, 3'), et qui est traversé par un flux de gaz (6, 6') dans le sens de l'écoulement, l'électrode haute tension (2, 2') et au moins une contre-électrode (4, 4') étant pourvues d'une connexion pour une alimentation en tension électrique afin de produire des décharges obscures, **caractérisé en ce qu'**un matériau en feuille (7) est agencé dans le flux de gaz (6, 6'), le matériau en feuille (7) présentant une combinaison de matériaux constituée d'au moins un fil (8) et d'au moins une fibre électriquement non conductrice (9).

2. Ozoniseur (1) selon la revendication 1, **caractérisé en ce qu'**au moins une fibre électriquement non conductrice (9) forme une bande qui présente une largeur au moins 5 fois supérieure à celle d'au moins un fil (8).

3. Ozoniseur (1) selon la revendication 1 ou 2, **caractérisé en ce que** le matériau en feuille (9) est un tissu ou un treillis.

4. Ozoniseur (1) selon l'une des revendications précédentes, **caractérisé en ce qu'**au moins une fibre électriquement non conductrice (9) se trouve à l'état plat avec au moins un diélectrique (3, 3').

5. Ozoniseur (1) selon l'une des revendications précédentes, **caractérisé en ce que** le rapport de la dimension de fils par unité de surface et de la dimension de fibres par unité de surface diminue dans le sens de l'écoulement.

6. Ozoniseur (1) selon l'une des revendications précédentes, **caractérisé en ce que** le matériau en feuille (7) est fait d'une seule pièce.

7. Ozoniseur (1) selon l'une des revendications précédentes, **caractérisé en ce qu'**au moins une fibre électriquement non conductrice (9) est fabriquée en céramique et/ou en verre.

8. Ozoniseur (1) selon l'une des revendications précédentes, **caractérisé en ce que** l'électrode haute tension (2, 2') est formée au moins partiellement à partir du matériau en feuille (7).

9. Utilisation d'un matériau en feuille (7) dans un flux de gaz d'un ozoniseur (1), le flux de gaz présentant un sens d'écoulement, **caractérisée en ce que** le matériau en feuille (7) présente une combinaison de matériaux constituée d'au moins un fil (8) et d'au moins une fibre électriquement non conductrice (9).

10. Utilisation selon la revendication 9, **caractérisée en ce qu'**au moins une fibre électriquement non conductrice (9) forme une bande qui présente une largeur au moins 5 fois supérieure à celle d'au moins un fil (8).

11. Utilisation selon la revendication 10, **caractérisée en ce que** la bande (9) présente une largeur au moins 10 fois supérieure à celle d'au moins un fil (8).

12. Utilisation selon l'une des revendications précédentes 9 à 11, **caractérisée en ce que** le rapport de la dimension de fils par unité de surface et de la dimension de fibres par unité de surface diminue dans le sens de l'écoulement.

13. Utilisation selon l'une des revendications précédentes 9 à 12, **caractérisée en ce que** le matériau en feuille (7) est un tissu ou un treillis.

14. Utilisation selon l'une des revendications précédentes 9 à 13, **caractérisée en ce que** le matériau en feuille (7) présente au moins une zone distincte dans laquelle est agencée au moins une fibre électriquement non conductrice (9) et **en ce qu'**au moins une autre zone distincte est prévue dans laquelle le matériau en feuille (7) ne contient aucune fibre électriquement non conductrice.

15. Utilisation selon l'une des revendications précédentes 9 à 14, **caractérisée en ce que** le matériau en feuille (7) est conçu d'une seule pièce.
